# EUROPEAN PATENT SPECIFICATION

(11) **EP 1 498 587 B1**
(45) Date of publication and mention of the grant of the patent: **10.05.2006**
(21) Application number: 03076916.0
(22) Date of filing: 19.06.2003
(51) Int. Cl.: F01N 3/04, F01N 7/00, F01P 3/20

(54) **Exhaust manifold and internal combustion engine comprising an exhaust manifold**
Abgaskrümmer und Brennkraftmaschine mit einem Abgaskrümmer
Tubulures d'échappement et moteur à combustion interne avec tubulures d'échappement

(43) Date of publication of application: 19.01.2005
(73) Proprietor: AB VOLVO PENTA, 405 08 Göteborg (SE)
(72) Inventor: Wolfgang Petutschnig, 8063 Brodingberg (AT); Karl Kirchweger, 8010 Graz (AT); Richard Stefansson, 415 06 Göteborg (SE); Bertil Andersson, 434 96 Kungsbacka (SE)
(74) Representative: Ekström, Nils

(56) References cited:
- US-A- 4 214 443
- US-A- 4 759 181
- US-A- 4 991 546
- US-A- 5 904 605
- US-B1- 6 457 442

## Description

### TECHNICAL FIELD

The invention relates to an exhaust manifold according to the preamble of claim 1. In particular the invention relates to an exhaust manifold, which is provided with a cooling jacket. The invention further relates to an internal combustion engine according to the preamble of claim 10.

### BACKGROUND ART

Marine propulsion systems are frequently mounted in environments sensitive to excessive heating. For this reason are exhaust manifolds and turbo units frequently connected to a liquid coolant system.

In for example US 5,109,668 A and US 4,179,884 A, marine propulsion systems are described whose exhaust manifolds are surrounded by water jackets for reasons of safety.

US 4,977,741 A describes an exhaust system combining an exhaust manifold and exhaust elbow, where the manifold is surrounded by a first water jacket and the elbow by a second water jacket. First and second water jackets are separated by a dam containing a passage for fluid communication between them. This will permit different temperature regions to be established in the exhaust system and prevent the formation of condensate due to excessive cooling of the exhaust gases.

In conventional applications the coolant is recirculated to the coolant system from the cooling jacket of the exhaust manifold outside of the cylinder head by way of external channels. As a consequence, construction volume is increased and more space is required.

US 4,214,443, which is considered to be the closest prior art, relates to a marine engine manifold in the form of an integral casting having a header, a coolant jacket, an exhaust manifold and a by-pass being controlled by a thermostatically controlled valve arranged in a valve housing. Also this arrangement will permit different temperature regions to be established in the exhaust system.

### DISCLOSURE OF INVENTION

It is an object of this invention to avoid the above disadvantages and provide an exhaust manifold that allows a compact layout of a coolant system.

It is a further object of the invention to provide an exhaust manifold assembly where the temperature distribution within the exhaust manifold can be levelled out.

This object is achieved by a cylinder head according to the characterising portion of claim 1.

In existing engine coolant systems for engines provided with a liquid cooled exhaust manifold, a thermostat housing is provided for guiding the flow of the coolant medium either via a heat exchanger or directly to an inlet of a pump housing without intermediate cooling depending on the operating condition of the engine. The thermostat housing is normally arranged as a separate housing externally of the exhaust manifold.

This type of coolant system configuration having an external thermostat housing prevents compact design of the coolant system since it requires that the exhaust manifold cooling jacket is connected to coolant ducts leading to the thermostat housing, which coolant ducts are arranged externally of an engine block and a cylinder head sealing the cylinder block.

An exhaust manifold according to the invention is provided with a cooling jacket which includes a first exhaust manifold cooling jacket outlet, a second exhaust manifold cooling jacket outlet and a thermostat space at which a coolant outlet duct is forked into said first and second exhaust manifold cooling jacket outlets.

By including the thermostat housing in the exhaust manifold cooling jacket, the need for externally arranged thermostat housing is eliminated.
A particularly compact engine coolant system design is allowed by mounting exhaust manifold having an exhaust manifold cooling jacket according to the invention directly on a cylinder head provided with an integral cross over passage leading to a heat exchanger and an integral short circuit passage leading directly to a pump housing. In a coolant system using the suggested configuration, the total length of ducts arranged externally of the engine is substantially reduced whereby a compact design is achieved.

According to the invention, the exhaust manifold includes a set of exhaust inlet ducts arranged to form part of an exhaust outlet leading from a set of cylinders, wherein the set of inlet openings includes at least one inlet opening for each cylinder in the set of cylinders. By including a set of exhaust inlet ducts arranged to form part of an exhaust outlet leading from a set of cylinders, and arranging the set of inlet openings such that it includes at least one inlet opening for each cylinder in the set of cylinders, the temperature distribution in the exhaust manifold will be kept at a more even level.

In a first embodiment of the invention, the coolant jacket includes a coolant inlet duct provided with a set of inlet openings arranged to be connected to a corresponding set of outlet ports arranged on a cylinder head.

In a second embodiment of the invention, the coolant inlet duct is provided with an outlet opening which is arranged to be connected to an inlet opening of coolant chamber arranged in a turbo charger assembly.

In a third embodiment of the invention, the exhaust manifold cooling jacket is divided by a partitioning wall into said coolant inlet duct and coolant outlet duct.

In a fourth embodiment of the invention, the coolant inlet duct and coolant outlet duct are flow connected via at least one bypass opening.

In a fifth embodiment of the invention, the exhaust manifold includes a set of exhaust inlet ducts, wherein at least one bypass opening is provided per exhaust inlet duct.

In a sixth embodiment of the invention, the coolant outlet duct have a larger cross section than said coolant inlet duct.

In an seventh embodiment of the invention, the coolant outlet duct of the exhaust manifold cooling jacket extends between an inlet opening and the first and second outlets of said exhaust manifold cooling jacket. The first cooling jacket outlet is arranged to be connected to the first port of the integral coolant cross over passage arranged in a cylinder head, the second cooling jacket outlet is arranged to be connected to a short circuit passage arranged in the cylinder head and the inlet opening of the coolant outlet duct is arranged to be connected to an outlet opening from a coolant chamber arranged in a turbo assembly.

The first, third, fourth, fifth, and sixth embodiments all, separately and in combination, contribute to level out the temperature distribution within the exhaust manifold.

The second and seventh embodiments, separately and in combination, contribute to allow a compact design of a coolant system, when internal combustion engine is assembled using an exhaust manifold according to the invention.

In a most compact variant of the invention, the proposal is put forward that the coolant inlet duct be disposed above the coolant outlet duct.

A further object of the invention is to provide an internal combustion engine having a compact layout of the coolant system.

This object is achieved by an internal combustion engine according to the characterising portion of claim 10.

Further preferred embodiments are described in the dependent claims.

### BRIEF DESCRIPTION OF DRAWINGS

The invention will now be discussed in greater detail with reference to the accompanying drawings.
- Fig. 1: show a perspective view of a cylinder head,
- Fig. 2: shows an internal combustion engine according to the invention, in a section along line I-I in Fig. 3,
- Fig. 3: shows the engine in a section along line II-II in Fig. 2,
- Fig. 4: shows an exhaust manifold assembly in a section along line III-III in Fig. 3,
- Fig. 5: shows an exhaust manifold assembly in another variant of the invention, in a section as in Fig. 4,
- Fig. 6: show the engine shown in figure 3, with the exhaust gas manifold removed,
- Fig. 7: shows the exhaust manifold assembly in a section along line V-V in Fig. 4,
- Fig. 8: shows the exhaust manifold assembly in a section along line VI-VI in Fig. 7,
- Fig. 9: shows the exhaust manifold assembly in a view according to arrow VII in Fig. 8,
- Fig. 10: shows the exhaust manifold assembly in a section along line VIII-VIII in Fig. 8,
- Fig. 11: shows the engine in a section along line IX-IX in Figs. 7 and 12, and
- Fig. 12: shows the engine in a section along line X-X in Fig. 11.

### MODES FOR CARRYING OUT THE INVENTION

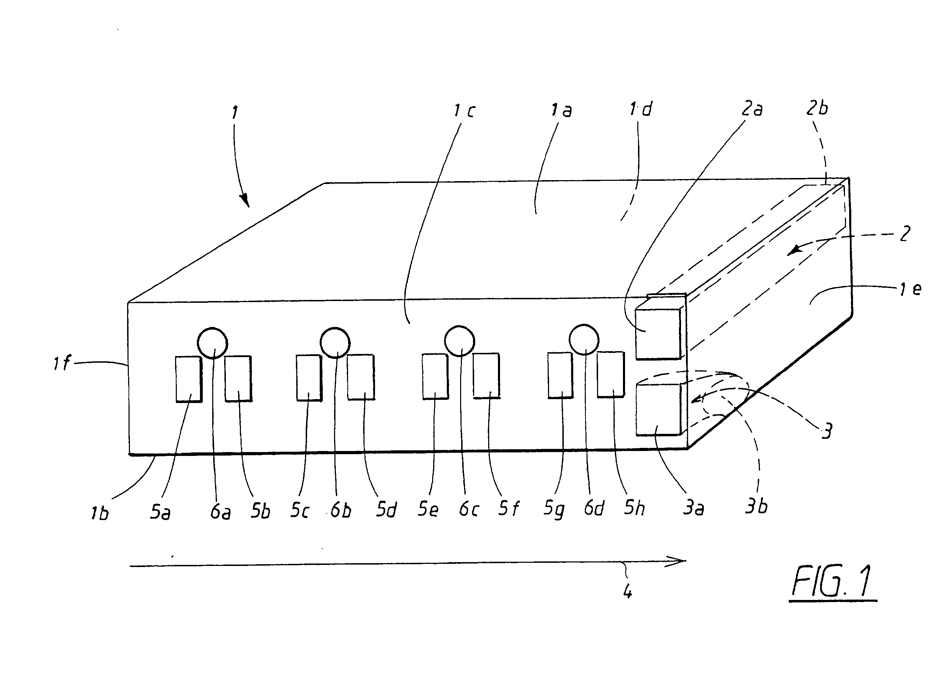

Figure 1 show a perspective view of a cylinder head 1. The cylinder head 1 has a top face 1a, a bottom face 1b arranged to be connected to a cylinder block, a lateral exhaust flange face 1c arranged to be connected to an exhaust manifold, a second lateral face 1d being opposed to said lateral exhaust flange face 1c, a front face 1e and an end face 1f.

The cylinder head 1 is provided with an integral coolant cross over passage 2 providing a first port 2a for connection to a first exhaust manifold cooling jacket outlet and extending between said first port 2a arranged at the lateral exhaust flange face 1c and a first coolant outlet 2b arranged at said second lateral face 1d, which is an inlet flange face arranged to be connected to an intake manifold 7.

The cylinder head 1 is furthermore provided with an integral coolant short circuit passage 3 providing a second port 3a for connection to a second exhaust manifold cooling jacket outlet and extending between said second port 3a arranged at said lateral exhaust flange face 1c and a second coolant outlet 3b arranged at the bottom face 1b for connection to a coolant pump inlet.

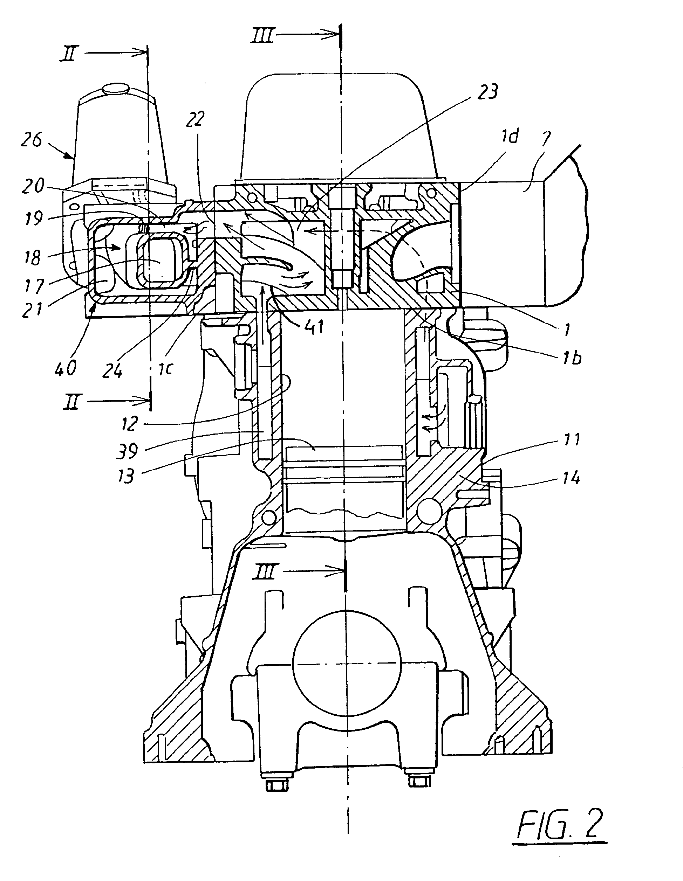

The cylinder head is provided with a coolant chamber 23, see fig 2, extending along a length axis 4 of the cylinder head 1. The coolant chamber 23 is arranged for cooling a plurality of exhaust channels 5a - 5h provided in the cylinder head 1. The lateral exhaust flange face 1c is provided with at least one outlet port 6a - 6d for each cylinder in said plurality of exhaust channels 5a - 5h. The outlet ports 6a - 6d are connected to said coolant chamber and are arranged to provide connections to a corresponding set of inlets arranged on an exhaust manifold cooling jacket.

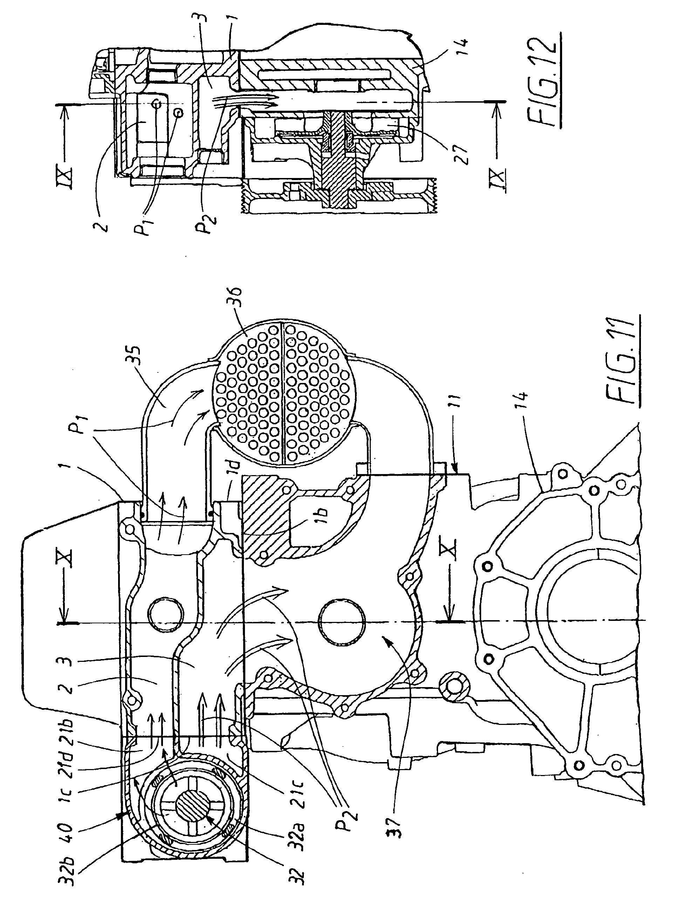

The figures 2 - 12 show an internal combustion engine 11 in which a cylinder head 1 as described in figure 1 is used. The internal combustion engine is provided with several cylinders 12 for reciprocating pistons 13. The engine 11 has a cylinder block 14 to which a cylinder head 1 is bolted. An exhaust manifold assembly 40 including an exhaust manifold 17 is flanged on to an exhaust flange face 1c on the side of the cylinder head 1. The exhaust manifold 17 includes a set of exhaust inlet ducts arranged to form part of an exhaust outlet leading from a set of cylinders 12.

The exhaust manifold 17 is surrounded by a cooling jacket 18. The cooling jacket 18 is divided by a partitioning wall 19 in the flow direction of the exhaust stream into a coolant inlet duct 20 and a coolant outlet duct 21. The exhaust manifold 17 communicates with at least one exhaust port 41 per cylinder 12.

The coolant inlet duct 20 has a set of inlets 22 including at least one inlet 22a - 22d per cylinder 12, which is flow-connected to the coolant chamber 23 of the cylinder head 1 via the outlet ports 6a - 6d of the cylinder head 1.

The coolant inlet duct 20 leads from said set of inlets 22 to an outlet opening 20a of said coolant inlet duct. The outlet opening 20a of the coolant inlet duct 20 is connected to an inlet opening 27 to a coolant chamber 28 arranged in a turbo charger assembly 26.

The coolant outlet duct 21 extends between an inlet opening 21a of said coolant outlet duct via a thermostat space 32a at which the coolant outlet duct 21 is branched into a first and a second branch 21b, 21c provided with a first exhaust manifold cooling jacket outlet 21d and a second exhaust manifold cooling jacket outlet 21e.

The coolant inlet duct 20 is connected to the coolant outlet duct 21 via at least one bypass opening 24.

The exhaust manifold assembly 40 extends essentially along a longitudinal side of the cylinder head 1 between a front face 1e and an end face 1f.

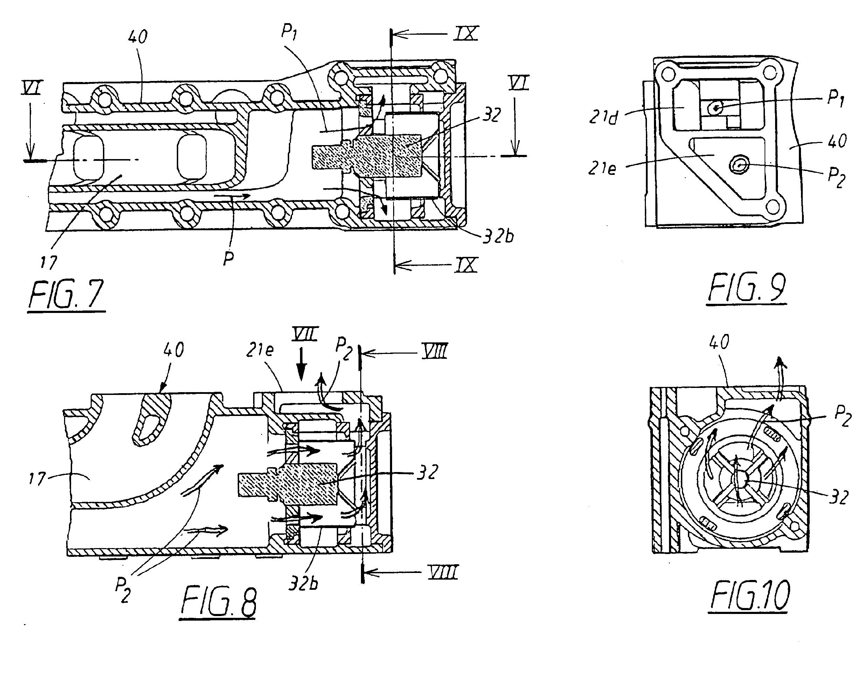

In the region of the first end 31 of the exhaust manifold assembly 40, a thermostat space 32a is provided for a heat control valve 32, which takes the coolant stream coming in from the coolant outlet duct 21, either via a coolant cross-over passage 2 situated in the area of the front face 1e of the cylinder head 1 and the coolant outlet duct 35 to the heat exchanger 36 and, further on, to the coolant pump 37, or via a coolant short-circuiting passage 3 directly to the coolant pump 37. Fig. 7 shows the position of the control valve sliding sleeve 32b when the engine is warm, Fig. 8 when the engine is cold. As indicated by arrows P₁, in a hot engine the coolant will flow through the first exhaust manifold cooling jacket outlet 21d forming an upper opening to the coolant cross-over passage 2. In a cold engine, however, the coolant passes through the second exhaust manifold cooling jacket outlet 21e forming a lower opening of the exhaust manifold assembly 40 into the coolant short-circuiting passage 3 (see arrows P₂ in Figures 8-12).

The exhaust manifold 17 is connected to the turbine part 25 of a water-cooled turbocharger 26 on the side of the second end 30 of the exhaust manifold assembly 40 in the area of the end face 1f of the cylinder head 1. The coolant inlet 27 of the coolant chamber 28 of the turbocharger 26 is connected to the first coolant passage 20 of the exhaust manifold 17, the coolant outlet 29 to the second coolant passage 21 of the exhaust manifold 17.

The coolant flow is indicated schematically by arrows P₁,P¹.

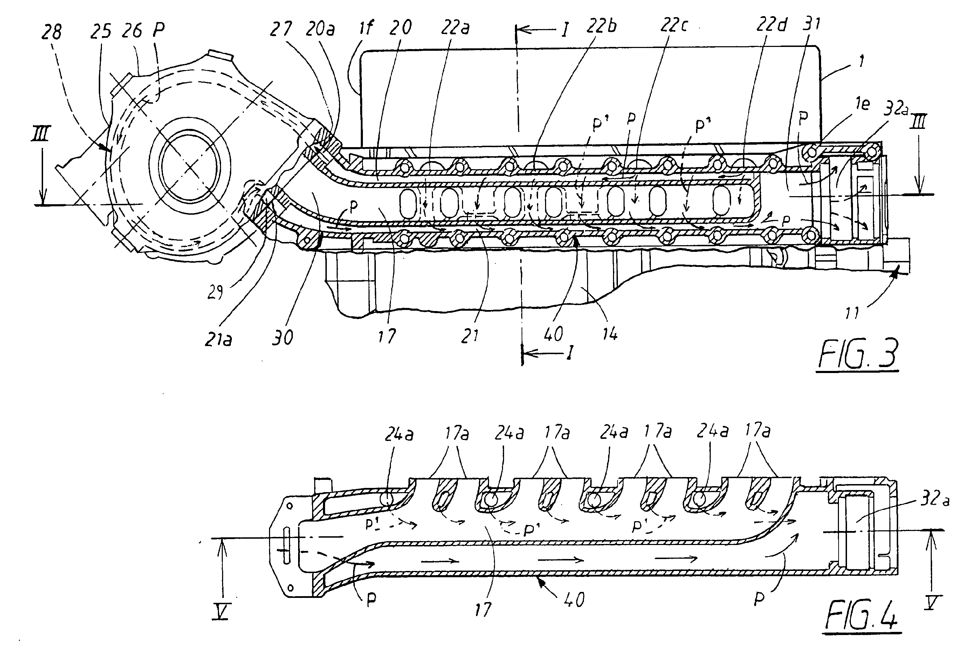

The coolant will flow from cylinder coolant chambers 39 in the crankcase 14 into coolant chambers 23 in the cylinder head 1, from where it passes through inlets coolant chambers 23 in the cylinder head 1, from where it passes through inlets 22 into the first coolant passage 20, upon which the coolant stream is divided. The main stream in the first coolant passage 20, which is marked by full arrows P in Fig. 3, is passed to the turbine part 25 of the turbocharger 26, in the same flow direction as the exhaust gas in the exhaust manifold 17. The coolant stream flows through the coolant chambers 28 of the turbine part 25 of the turbocharger 26, and will reach the heat control valve 32 located at the front face 1e of the cylinder head 1 via the second coolant passage 21, against the flow direction of the exhaust stream.

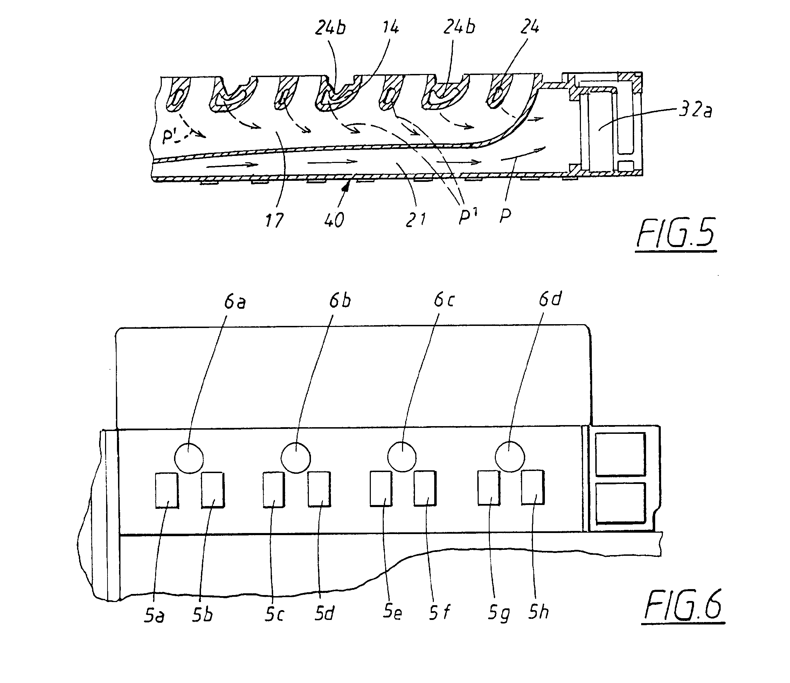

On the other hand, secondary streams of the coolant will reach the second coolant passage 21 directly from the first coolant passage 20, via bypass openings 24. These secondary streams are entered in Fig. 3 by broken arrows P¹. Secondary streams P¹ are controlled by predefined throttle cross-sections. Throttling may be achieved by providing precisely defined openings 24a (see Fig. 4) in the partitioning wall 19, or by restricted cross-sections 24b formed integral with the bypass openings 24, as shown in Fig. 5. With the aid of the secondary streams P¹, a uniform temperature distribution will be obtained in the exhaust manifold assembly 40. In addition, excessive cooling of the turbine part 25 of the turbocharger 26 will be prevented.

In dependence of the temperature of the coolant, the heat control valve 32 will direct the coolant stream P to the coolant pump 37, either directly via a short-circuiting passage 38, or indirectly via a coolant cross-over passage 2. Once a certain, predefined coolant temperature is reached, the heat control valve 32 will open the flow path via the coolant cross-over passage 2 to a heat exchanger 36, in order to ensure sufficient cooling of the coolant. From the heat exchanger 36 the coolant will reach the coolant pump 37.

The coolant cross-over passage 2, which departs from the exhaust flange face 1c and preferably extends to the inlet flange face 1d of an inlet manifold not shown in the drawings, is positioned at the front face 1e of the cylinder head 1, and, more preferably, cast integral therewith. The coolant short-circuiting passage 3 extending between the exhaust flange face 1c and the cylinder head sealing face 1d, is also cast integral with the cylinder head 1.

The assembly described in this paper will permit uniform cooling of the exhaust manifold assembly 40 in a simple and space-saving manner.

## Claims

1. An exhaust manifold assembly (40) comprising an exhaust manifold (17) which is at least partially surrounded by a cooling jacket (18), **characterized in in that** said cooling jacket (18) includes a first exhaust manifold cooling jacket outlet (21 d), a second exhaust manifold cooling jacket outlet (21e) and a thermostat space (32a) at which a coolant outlet duct (21) is forked into said first and second exhaust manifold cooling jacket outlets (21d, 21e), said exhaust manifold (17) includes a set of exhaust inlet ducts (17a) arranged to form part of an exhaust outlet leading from a set of cylinders (12) and said coolant jacket (18) includes a coolant inlet duct (20) provided with a set of inlet openings (22a - 22d), said set of inlet openings (22a - 22d) includes at least one inlet opening (22a - 22d) for each cylinder in said set of cylinders (12).

2. An exhaust manifold assembly according to claim 1, **characterized in that** said set of inlet openings (22a - 22d) arranged to be connected to a corresponding set of outlet ports (6a - 6d) arranged on a cylinder head (1).

3. An exhaust manifold assembly according to claim 2, **characterized in that** said coolant inlet duct (20) is provided with an outlet opening (20a) which is arranged to be connected to an inlet opening (27) of coolant chamber (28) arranged in a turbo charger assembly (26).

4. An exhaust manifold assembly according to any of claims 2 - 3, **characterized in that** said exhaust manifold cooling jacket (18) is divided by a partitioning wall (19) into said coolant inlet duct (20) and coolant outlet duct (21).

5. An exhaust manifold assembly according to any of claims 2 - 4, **characterized in that** said coolant inlet duct (20) and coolant outlet duct (21) are flow connected via at least one bypass opening (24).

6. An exhaust manifold assembly according to claim 5, wherein said exhaust manifold includes (17) a set of exhaust inlet ducts (17a), **characterized in that** at least one bypass opening (24) is provided per exhaust inlet duct (17a).

7. An exhaust manifold assembly according to any of claims 2 - 6, **characterized in that** said coolant outlet duct (21) have a larger cross section than said coolant inlet duct (20).

8. An exhaust manifold assembly according to any of the preceding claims, **characterized in that** said coolant outlet duct (21) extends between an inlet opening (21a) of said coolant outlet duct (21) and said first and second exhaust manifold cooling jacket outlets (21d, 21e).

9. An exhaust manifold assembly according to claim 8, **characterized in that** said inlet opening of said coolant outlet duct (21) is arranged to be connected to an outlet opening (29) from a coolant chamber (28) arranged in a turbo charger assembly (26).

10. An internal combustion engine (11) comprising a cylinder block (14) having a plurality of cylinders (12), a cylinder head (1) sealing said cylinder block (14), and an exhaust manifold assembly (40) comprising an exhaust manifold (17) which is at least partially surrounded by a cooling jacket (18), **characterized in in that** said cooling jacket (18) includes a first exhaust manifold cooling jacket outlet (21d), a second exhaust manifold cooling jacket outlet (21e) and a thermostat space (32a) at which a coolant outlet duct (21) is forked into said first and second exhaust manifold cooling jacket outlets (21d,21e), said exhaust manifold (17) includes a set of exhaust inlet ducts (17a) forming part of an exhaust outlet leading from said plurality of cylinders (12) and said coolant jacket (18) includes a coolant inlet duct (20) provided with a set of inlet openings (22a - 22d), said set of inlet openings (22a - 22d) includes at least one inlet opening (22a - 22d) for each cylinder in said plurality of cylinders (12).

11. An internal combustion engine according to claim 10, **characterized in that** said set of inlet openings (22a - 22d) connected to a corresponding set of outlet ports (6a - 6d) arranged on said cylinder head (1).

12. An internal combustion engine (11) according to claim 11, **characterized in that** said coolant inlet duct (20) is provided with an outlet opening (20a) which is connected to an inlet opening (27) to a coolant chamber (28) arranged in a turbo charger assembly (26).

13. An internal combustion engine according to any of claims 11 - 12, **characterized in that** said exhaust manifold cooling jacket (18) is divided by a partitioning wall (19) into said coolant inlet duct (20) and coolant outlet duct (21).

14. An internal combustion engine according to any of claims 11 - 13, **characterized in that** said coolant inlet duct (20) and coolant outlet duct (21) are flow connected via at least one bypass opening (24).

15. An internal combustion engine according to claim 14, wherein said exhaust manifold (17) includes a set of exhaust inlet ducts (17a), **characterized in that** at least one bypass (24) opening is provided per exhaust inlet duct (17a).

16. An internal combustion engine according to any of claims 11 - 15, **characterized in that** said coolant outlet duct (21) have a larger cross section than said coolant inlet duct (20).

17. An internal combustion engine according to any of claims 10 - 16 **characterized in that** said coolant outlet duct (21) extends between an inlet opening (21 a) of said coolant outlet duct (21) and said first and second exhaust manifold cooling jacket outlets (21d, 21e).

18. An internal combustion engine according to claim 17, **characterized in that** said inlet opening (21a) of said coolant outlet duct (21) is connected to an outlet opening (29) from a coolant chamber (28) arranged in a turbo charger assembly (26).

19. An internal combustion engine according to any of claims 11 - 18, wherein said cylinder head (1) includes a top face (1a), a bottom face (1b) connected to said cylinder block (14), a lateral exhaust flange face (1c) connected to said exhaust manifold assembly (40), a second lateral face (1d) being opposed to said lateral exhaust flange face (1c), a front face (1e) and an end face (1f), **characterized in that** said cylinder head (1) is provided with an integral coolant cross over passage (2) providing a first port (2a) connected to said first exhaust manifold cooling jacket outlet (21d) and extending between said first port (2a) arranged at said lateral exhaust flange face (1c) of said cylinder head (1) and a first coolant outlet duct (2b) arranged at another of said faces (1a, 1b, 1d, 1e, 1f).

20. An internal combustion engine according to claim 19, **characterized in that** said first coolant outlet duct (2b) is arranged on said second lateral face (1d).

21. An internal combustion engine according to claim 20, **characterized in that** said second lateral face (1d) is an intake flange face connected to an intake manifold (7).

22. An internal combustion engine according to any of claims 19 - 21, **characterized in that** said integral coolant cross over passage (2) is connected to a coolant pump (37) via a heat exchanger(36).

23. An internal combustion engine according to any of claims 19 - 22, **characterized in that** said cylinder head (1) is provided with an integral coolant short circuit passage (3) providing a second port (3a) connected to a second outlet (21e) of said exhaust manifold cooling jacket (18) and extending between said second port (3a) arranged at said lateral exhaust flange face (1c) and a second coolant outlet duct (3b) arranged at another of said faces (1a, 1b, 1d, 1e, 1f) leading to a coolant pump (36) inlet.

24. An internal combustion engine according to claim 23, **characterized in that** said second port (3b) is provided at said bottom face (1b).

25. An internal combustion engine according to any of claims 19 - 24, wherein said cylinder head (1) is provided with a coolant chamber (23) arranged for cooling a plurality of exhaust channels (5a - 5h) provided in said cylinder head (1), **characterized in that** said lateral exhaust flange face (1c) is provided with at least one outlet port (6a - 6d) for each cylinder in said plurality of cylinders (12), said outlet ports (6a - 6d) being connected to said coolant chamber (23) and provide connections to a corresponding set of inlets (22a - 22d) arranged on said exhaust manifold cooling jacket (18).

## Patentansprüche

1. Abgaskrümmeranordnung (40) mit einem Abgaskrümmer (17), welcher zumindest teilweise von einem Kühlmantel (18) umgeben ist, **dadurch gekennzeichnet, dass** der Kühlmantel (18) einen ersten Abgaskrümmerkühlmantelauslass (21d), einen zweiten Abgaskrümmerkühlmantelauslass (21e) und einen Thermostatraum (32a) aufweist, an welchem eine Kühlmittelauslassleitung (21) in den ersten und zweiten Abgaskrümmerkühlmantelauslass (21d, 21e) verzweigt, wobei der Abgaskrümmer (17) eine Gruppe von Abgaseinlasskanälen (17a) aufweist, die zur Bildung eines Abschnitts eines Abgasauslasses angeordnet sind, der von einer Gruppe von Zylindern (12) herführt, und der Kühlmittelmantel (18) eine Kühlmitteleinlassleitung (20) besitzt, welcher mit einer Gruppe von Einlassöffnungen (22a bis 22d) versehen ist, wobei die Gruppe von Einlassöffnungen (22a bis 22d) zumindest eine Einlassöffnung (22a bis 22d) für jeden Zylinder in der Gruppe von Zylindern (12) aufweist.

2. Abgaskrümmeranordnung nach Anspruch 1, **dadurch gekennzeichnet, dass** die Gruppe von Einlassöffnungen (22a bis 22d) mit einer korrespondierenden Gruppe von auf einem Zylinderkopf (1) angeordneten Auslassöffnungen (6a bis 6d) verbindbar angeordnet ist.

3. Abgaskrümmeranordnung nach Anspruch 2, **dadurch gekennzeichnet, dass** die Kühlmitteleinlassleitung (20) mit einer Auslassöffnung (20a) versehen ist, welche mit einer Einlassöffnung (27) einer in einer Turboladerbaugruppe (26) angeordneten Kühlmittelkammer (28) verbindbar angeordnet ist.

4. Abgaskrümmeranordnung nach einem der Ansprüche 2 bis 3, **dadurch gekennzeichnet, dass** der Abgaskrümmerkühlmantel (18) durch eine Trennwand (19) in die Kühlmitteleinlassleitung (20) und die Kühlmittelauslassleitung (21) aufgeteilt ist.

5. Abgaskrümmeranordnung nach einem der Ansprüche 2 bis 4, **dadurch gekennzeichnet, dass** die Kühlmitteleinlassleitung (20) und die Kühlmittelauslassleitung (21) strömungsmäßig über zumindest eine Bypass-Öffnung (24) verbunden sind.

6. Abgaskrümmeranordnung nach Anspruch 5, wobei der Abgaskrümmer (17) eine Gruppe von Abgaseinlasskanälen (17a) aufweist, **dadurch gekennzeichnet, dass** zumindest eine Bypass-Öffnung (24) pro Abgaseinlassleitung (17a) vorgesehen ist.

7. Abgaskrümmeranordnung nach einem der Ansprüche 2 bis 6, **dadurch gekennzeichnet, dass** die Kühlmittelauslassleitung (21) einen größeren Querschnitt als die Kühlmitteleinlassleitung (20) aufweist.

8. Abgaskrümmeranordnung nach einem der vorhergehenden Ansprüche, **dadurch gekennzeichnet, dass** sich die Kühlmittelauslassleitung (21) zwischen einer Einlassöffnung (21a) der Kühlmittelauslassleitung (21) und dem ersten und zweiten Abgaskrümmerkühlmantelauslass (21d, 21e) erstreckt.

9. Abgaskrümmeranordnung nach Anspruch 8, **dadurch gekennzeichnet, dass** die Einlassöffnung der Kühlmittelauslassleitung (21) mit einer Auslassöffnung (29) von in einer Turboladerbaugruppe (26) angeordneten Kühlmittelkammer (28) verbindbar angeordnet ist.

10. Brennkraftmaschine (11), welche einen Zylinderblock (14) mit einer Vielzahl von Zylindern (12), einen Zylinderkopf (1), der den Zylinderblock (14) verschließt, und eine Abgaskrümmeranordnung (40) mit einem Abgaskrümmer (17) aufweist, welcher zumindest teilweise von einem Kühlmantel (18) umgeben ist, **dadurch gekennzeichnet, dass** der Kühlmantel (18) einen ersten Abgaskrümmerkühlmantelauslass (21d), einen zweiten Abgaskrümmerkühlmantelauslass (21e) und einen Thermostatraum (32a) aufweist, an welchem eine Kühlmittelauslassleitung (21) in den ersten und zweiten Abgaskrümmerkühlmantelauslass (21d, 21e) verzweigt, wobei der Abgaskrümmer (17) eine Gruppe von Abgaseinlasskanälen (17a) aufweist, welche einen Abschnitt eines Abgasauslasses bilden, der von der Vielzahl von Zylindern (12) herführt, und der Kühlmittelmantel (18) eine Kühlmitteleinlassleitung (20) besitzt, welcher mit einer Gruppe von Einlassöffnungen (22a bis 22d) versehen ist, wobei die Gruppe von Einlassöffnungen (22a bis 22d) zumindest eine Einlassöffnung (22a bis 22d) für jeden Zylinder in der Vielzahl von Zylindern (12) aufweist.

11. Brennkraftmaschine nach Anspruch 10, **dadurch gekennzeichnet, dass** die Gruppe von Einlassöffnungen (22a bis 22d) mit einer auf dem Zylinderkopf (1) angeordneten korrespondierenden Gruppe von Auslassöffnungen (6a bis 6d) verbunden ist.

12. Brennkraftmaschine (11) nach Anspruch 11, **dadurch gekennzeichnet, dass** die Kühlmitteleinlassleitung (20) mit einer Auslassöffnung (20a) versehen ist, welche mit einer Auslassöffnung (27) zu einer in einer Turboladerbaugruppe (26) angeordneten Kühlmittelkammer (28) verbunden ist.

13. Brennkraftmaschine nach einem der Ansprüche 11 bis 12, **dadurch gekennzeichnet, dass** der Abgaskrümmerkühlmantel (18) durch eine Trennwand (19) in die Kühlmitteleinlassleitung (20) und die Kühlmittelauslassleitung (21) aufgeteilt ist.

14. Brennkraftmaschine nach einem der Ansprüche 11 bis 13, **dadurch gekennzeichnet, dass** die Kühlmitteleinlassleitung (20) und die Kühlmittelauslassleitung (21) strömungsmäßig über zumindest eine Bypass-Öffnung (24) verbunden sind.

15. Brennkraftmaschine nach Anspruch 14, wobei der Abgaskrümmer (17) eine Gruppe von Abgaseinlasskanälen (17a) aufweist, **dadurch gekennzeichnet, dass** zumindest eine Bypass-Öffnung (24) pro Abgaseinlassleitung (17a) vorgesehen ist.

16. Brennkraftmaschine nach einem der Ansprüche 11 bis 15, **dadurch gekennzeichnet, dass** die Kühlmittelauslassleitung (21) einen größeren Querschnitt als die Kühlmitteleinlassleitung (20) aufweist.

17. Brennkraftmaschine nach einem der Ansprüche 11 bis 16, **dadurch gekennzeichnet, dass** sich die Kühlmittelauslassleitung (21) zwischen einer Einlassöffnung (21a) der Kühlmittelauslassleitung (21) und dem ersten und zweiten Abgaskrümmerkühlmantelauslass (21d, 21e) erstreckt.

18. Brennkraftmaschine nach Anspruch 17, **dadurch gekennzeichnet, dass** die Einlassöffnung (21a) der Kühlmittelauslassleitung (21) mit einer Auslassöffnung (29) von einer in einer Turboladerbaugruppe (26) angeordneten Kühlmittelkammer (28) verbunden ist.

19. Brennkraftmaschine nach einem der Ansprüche 11 bis 18, wobei der Zylinderkopf (1) eine Oberseite (1a), eine mit dem Zylinderblock (14) verbundene Unterseite (1b), eine mit der Abgaskrümmeranordnung (40) verbundene Abgasflanschquerseite (1c), eine zu der Abgasflanschquerseite (1c) gegenüber liegende zweite Querseite (1d), eine Vorderseite (1e) und eine Stirnseite (1f) aufweist, **dadurch gekennzeichnet, dass** der Zylinderkopf (1) mit einer integralen Kühlmitteldurchgangsleitung (2) versehen ist, welche eine erste Öffnung (2a) aufweist, die mit dem ersten Abgaskrümmerkühlmantelauslass (21d) verbunden ist, und sich zwischen der ersten Öffnung (2a), die an der Abgasflanschquerseite (1c) des Zylinderkopfs (1) angeordnet ist, und einer ersten Kühlmittelauslassleitung (2b) erstreckt, die an einer weiteren der Seiten (1a, 1b, 1d, 1e, 1f) angeordnet ist.

20. Brennkraftmaschine nach Anspruch 19, **dadurch gekennzeichnet, dass** die erste Kühlmittelauslassleitung (2b) auf der zweiten Querseite (1d) angeordnet ist.

21. Brennkraftmaschine nach Anspruch 20, **dadurch gekennzeichnet, dass** die zweite Querseite (1d) eine Einlassflanschseite ist, die mit einem Einlasskrümmer (7) verbunden ist.

22. Brennkraftmaschine nach einem der Ansprüche 19 bis 21, **dadurch gekennzeichnet, dass** die integrale Kühlmitteldurchgangsleitung (2) mit einer Kühlmittelpumpe (37) über einen Wärmeaustauscher (36) verbunden ist.

23. Brennkraftmaschine nach einem der Ansprüche 19 bis 22, **dadurch gekennzeichnet, dass** der Zylinderkopf (1) mit einer integralen Kühlmittelkurzschlussleitung (3) versehen ist, welche eine zweite Öffnung (3a) aufweist, die mit einem zweiten Auslass (21e) des Abgaskrümmerkühlmantels (18) verbunden ist und sich zwischen der zweiten Öffnung (3a), die an der Abgasflanschquerseite (1c) angeordnet ist, und einer zweiten Kühlmittelauslassleitung (3b) erstreckt, die an einer weiteren der Seiten (1a, 1b, 1d, 1e, 1f) angeordnet ist und zu einem Kühlmittelpumpeneinlass (36) führt.

24. Brennkraftmaschine nach Anspruch 23, **dadurch gekennzeichnet, dass** die zweite Öffnung (3b) an der Unterseite (1b) vorgesehen ist.

25. Brennkraftmaschine nach einem der Ansprüche 19 bis 24, wobei der Zylinderkopf (1) mit einer Kühlmittelkammer (23) versehen ist, die zur Kühlung einer in dem Zylinderkopf (1) vorgesehenen Vielzahl von Abgaskanälen (5a bis 5h) angeordnet ist, **dadurch gekennzeichnet, dass** die Abgasflanschquerseite (1c) mit zumindest einer Auslassöffnung (6a bis 6d) für jeden Zylinder in der Vielzahl von Zylindern (12) versehen ist, wobei die Auslassöffnungen (6a bis 6d) mit der Kühlmittelkammer (23) verbunden sind und Verbindungen zu einer korrespondierenden Gruppe von Einlässen (22a bis 22d) vorsehen, die an dem Abgaskrümmerkühlmantel (18) angeordnet sind.

## Revendications

1. Ensemble formant collecteur d'échappement (40) comportant un collecteur d'échappement (17) qui est au moins partiellement entouré par une chemise de refroidissement (18), **caractérisé en ce que** ladite chemise de refroidissement (18) comporte une première sortie de chemise de refroidissement de collecteur d'échappement (21d), une second sortie de chemise de refroidissement de collecteur d'échappement (21e) et un espace thermostatique (32a) au niveau duquel un conduit de sortie de liquide de refroidissement (21) est bifurqué en lesdites première et seconde sorties de chemise de refroidissement de collecteur d'échappement (21d, 21e), ledit collecteur d'échappement (17) comporte un ensemble de conduits d'entrée d'échappement (17a) agencés pour former une partie d'une sortie d'échappement partant d'un ensemble de cylindres (12), et ladite chemise de refroidissement (18) comporte un conduit d'entrée de liquide de refroidissement (20) muni d'un ensemble d'ouvertures d'entrée (22a à 22d), ledit ensemble d'ouvertures d'entrée (22a à 22d) comporte au moins une ouverture d'entrée (22a à 22d) pour chaque cylindre dans ledit ensemble de cylindres (12).

2. Ensemble formant collecteur d'échappement selon la revendication 1, **caractérisé en ce que** ledit ensemble d'ouvertures d'entrée (22a à 22d) sont agencées pour être connectées à un ensemble correspondant d'ouvertures de sortie (6a à 6d) agencées sur une culasse (1).

3. Ensemble formant collecteur d'échappement selon la revendication 2, **caractérisé en ce que** ledit conduit d'entrée de liquide de refroidissement (20) est muni d'une couverture de sortie (20a) qui est agencée pour être connectée à une ouverture d'entrée (27) d'une chambre de liquide de refroidissement (28) agencée dans un ensemble formant turbocompresseur (26).

4. Ensemble formant collecteur d'échappement selon la revendication 2 ou 3, **caractérisé en ce que** ladite chemise de refroidissement de collecteur d'échappement (18) est divisée par une cloison de séparation (19) en ledit conduit d'entrée de liquide de refroidissement (20) et ledit conduit de sortie de liquide de refroidissement (21).

5. Ensemble formant collecteur d'échappement selon l'une quelconque des revendications 2 à 4, **caractérisé en ce que** ledit conduit d'entrée de liquide de refroidissement (20) et ledit conduit de sortie de liquide de refroidissement (21) sont connectés en termes d'écoulement via au moins une ouverture de dérivation (24).

6. Ensemble formant collecteur d'échappement selon la revendication 5, dans lequel ledit collecteur d'échappement (17) comporte un ensemble de conduits d'entrée d'échappement (17a), **caractérisé en ce qu'**au moins une ouverture de dérivation (24) est fournie par conduit d'entrée d'échappement (17a).

7. Ensemble formant collecteur d'échappement selon l'une quelconque des revendications 2 à 6, **caractérisé en ce que** ledit conduit de sortie de liquide de refroidissement (21) a une section transversale supérieure à celle dudit conduit d'entrée de liquide de refroidissement (20).

8. Ensemble formant collecteur d'échappement selon l'une quelconque des revendications précédentes, **caractérisé en ce que** ledit conduit de sortie de liquide de refroidissement (21) s'étend entre une ouverture d'entrée (21a) dudit conduit de sortie de liquide de refroidissement (21) et lesdites première et seconde sorties de chemise de refroidissement de collecteur d'échappement (21d, 21e).

9. Ensemble formant collecteur d'échappement selon la revendication 8, **caractérisé en ce que** ladite ouverture d'entrée dudit conduit de sortie de liquide de refroidissement (21) est agencée pour être connectée à une ouverture de sortie (29) depuis une chambre de liquide de refroidissement (28) agencée dans un ensemble formant turbocompresseur (26).

10. Moteur à combustion interne (11) comportant un bloc-cylindres (14) ayant une pluralité de cylindres (12), une culasse (1) assurant l'étanchéité dudit bloc-cylindres (14), et un ensemble formant collecteur d'échappement (40) comportant un collecteur d'échappement (17) qui est au moins pour partie entouré par une chemise de refroidissement (18), **caractérisé en ce que** ladite chemise de refroidissement (18) comporte une première sortie de chemise de refroidissement de collecteur d'échappement (21d), une seconde sortie de chemise de refroidissement de collecteur d'échappement (21e), et un espace thermostatique (32a) au niveau duquel un conduit de sortie de liquide de refroidissement (21) est bifurqué en lesdites première et seconde sorties de chemise de refroidissement de collecteur d'échappement (21d, 21e), ledit collecteur d'échappement (17) comporte un ensemble de conduits d'entrée d'échappement (17a) formant une partie d'une sortie d'échappement partant de ladite pluralité de cylindres (12), et ladite chemise de refroidissement (18) comporte un conduit d'entrée de liquide de refroidissement (20) muni d'un ensemble d'ouvertures d'entrée (22a à 22d), ledit ensemble d'ouvertures d'entrée (22a à 22d) comporte au moins une ouverture d'entrée (22a à 22d) pour chaque cylindre dans ladite pluralité de cylindres (12).

11. Moteur à combustion interne selon la revendication 10, **caractérisé en ce que** ledit ensemble d'ouvertures d'entrée (22a à 22d) est connecté à un ensemble correspondant d'orifices de sortie (6a à 6d) agencés sur ladite culasse (1).

12. Moteur à combustion interne (11) selon la revendication 11, **caractérisé en ce que** ledit conduit d'entrée de liquide de refroidissement (20) est muni d'une ouverture de sortie (20a) qui est connectée à une ouverture d'entrée (27) vers une chambre de liquide de refroidissement (28) agencée dans un ensemble formant turbocompresseur (26).

13. Moteur à combustion interne selon la revendication 11 ou 12, **caractérisée en ce que** ladite chemise de refroidissement de collecteur d'échappement (18) est divisée par une paroi de séparation (19) entre ledit conduit d'entrée de liquide de refroidissement (20) et ledit conduit de sortie de liquide de refroidissement (21).

14. Moteur à combustion interne selon l'une quelconque des revendications 11 à 13, **caractérisé en ce que** ledit conduit d'entrée de liquide de refroidissement (20) et ledit conduit de sortie de liquide de refroidissement (21) sont connectés en termes d'écoulement via au moins une ouverture de dérivation (24).

15. Moteur à combustion interne selon la revendication 14, dans lequel ledit collecteur d'échappement (17) comporte un ensemble de conduits d'entrée d'échappement (17a), **caractérisé en ce qu'**au moins une ouverture de dérivation (24) est fournie par conduit d'entrée d'échappement (17a).

16. Moteur à combustion interne selon l'une quelconque des revendications 11 à 15, **caractérisé en ce que** ledit conduit de sortie de liquide de refroidissement (21) a une section de coupe transversale supérieure à celle dudit conduit d'entrée de liquide de refroidissement (20).

17. Moteur à combustion interne selon l'une quelconque des revendications 10 à 16, **caractérisé en ce que** ledit conduit de sortie de liquide de refroidissement (21) s'étend entre une ouverture d'entrée (21a) dudit conduit de sortie de liquide de refroidissement (21) et lesdites première et seconde sorties de chemise de refroidissement de collecteur d'échappement (21d, 21e).

18. Moteur à combustion interne selon la revendication 17, **caractérisé en ce que** ladite ouverture d'entrée (21a) dudit conduit de sortie de liquide de refroidissement (21) est connectée à une ouverture de sortie (29) depuis une chambre de liquide de refroidissement (28) agencée dans un ensemble formant turbocompresseur (26).

19. Moteur à combustion interne selon l'une quelconque des revendications 11 à 18, dans lequel ladite culasse (1) comporte une face supérieure (1a), une face inférieure (1d) connectée audit bloc-cylindres (14), une face latérale formant bride d'échappement (1c) connectée audit ensemble formant collecteur d'échappement (40), une seconde face latérale (1d) opposée à ladite face latérale formant bride d'échappement (1c), une face avant (1e) et une face d'extrémité (1f), **caractérisé en ce que** ladite culasse (1) est munie d'un passage de liaison de liquide de refroidissement en un seul bloc (2) fournissant un premier orifice (2a) connecté à ladite première sortie de chemise de refroidissement de collecteur d'échappement (21d), et s'étendant entre ledit premier orifice (2a) agencé au niveau de ladite face latérale formant bride d'échappement (1c) de ladite culasse (1) et un premier conduit de sortie de liquide de refroidissement (2b) agencé au niveau d'une autre desdites faces (1a, 1b, 1d, 1e, 1f).

20. Moteur à combustion interne selon la revendication 19, **caractérisé en ce que** ledit premier conduit de sortie de liquide de refroidissement (2b) est agencé sur ladite seconde face latérale (1d).

21. Moteur à combustion interne selon la revendication 20, **caractérisé en ce que** ladite seconde face latérale (1d) est une face formant bride d'admission connectée à un collecteur d'admission (7).

22. Moteur à combustion interne selon l'une quelconque des revendications 19 à 21, **caractérisé en ce que** ledit passage de liaison de liquide de refroidissement en un seul bloc (2) est connecté à une pompe à liquide de refroidissement (37) via un échangeur thermique (36).

23. Moteur à combustion interne selon l'une quelconque des revendications 19 à 22, **caractérisé en ce que** ladite culasse (1) est munie d'un passage de circuit court de liquide de refroidissement en un seul bloc (3) fournissant un second orifice (3a) connecté à une seconde sortie (21e) de ladite chemise de refroidissement de collecteur d'échappement (18), et s'étendant entre ledit second orifice (3a) agencé au niveau de ladite face latérale formant bride d'échappement (1c) et un second conduit de sortie de liquide de refroidissement (3b) agencé au niveau d'une autre desdites faces (1a, 1b, 1d, 1e, 1f) menant à l'entrée d'une pompe à liquide de refroidissement (36).

24. Moteur à combustion interne selon la revendication 23, **caractérisé en ce que** ledit second orifice (3b) est agencé sur ladite face inférieure (1b).

25. Moteur à combustion interne selon l'une quelconque des revendications 19 à 24, dans lequel ladite culasse (1) est munie d'une chambre de liquide de refroidissement (23) agencée pour refroidir une pluralité de canaux d'échappement (5a à 5h) disposés dans ladite culasse (1), **caractérisé en ce que** ladite face latérale formant bride d'échappement (1c) est munie d'au moins un orifice de sortie (6a à 6d) pour chaque cylindre dans ladite pluralité de cylindres (12), lesdits orifices de sortie (6a à 6d) étant connectés à ladite chambre de liquide de refroidissement (23) et fournissant des connexions à un ensemble correspondant d'entrées (22a à 22d) agencées sur ladite chemise de refroidissement de collecteur d'échappement (18).
